# FASCICULE DE BREVET EUROPEEN

(11) **EP 2 403 151 B1**
(45) Date de publication et mention de la délivrance du brevet: **03.10.2012**
(21) Numéro de dépôt: 11171184.2
(22) Date de dépôt: 23.06.2011
(51) Int. Cl.: H04B 3/54

(54) **ENSEMBLE ÉQUIPEMENT/BLOC SECTEUR À TRANSMISSION DE DONNÉES PAR COURANTS PORTEURS EN LIGNE CPL**
AUSRÜSTUNGSEINHEIT/SEKTORBLOCK MIT CPL-ONLINE-DATENÜBERTRAGUNG DURCH TRÄGERSTROM
DEVICE/POWER ADAPTER ASSEMBLY WITH DATA TRANSMISSION BY POWERLINE COMMUNICATION PLC

(30) Priorité: 02.07.2010 FR 1055395
(43) Date de publication de la demande: 04.01.2012
(73) Titulaire: FREEBOX, 75008 Paris (FR)
(72) Inventeur: Callanquin, François, 75015 PARIS (FR)
(74) Mandataire: Dupuis-Latour, Dominique

(56) Documents cités:
- EP-A1- 1 343 253
- DE-A1- 2 903 860
- US-A- 4 835 517

## Description

L'invention concerne les équipements multimédia domestiques mettant en oeuvre une technique de transmission de données numériques par courants porteurs en ligne, technique dite CPL ou PLC *(Power Line Communication).*

Il s'agit d'échanger des données numériques entre plusieurs équipements d'une même habitation via un réseau filaire constitué par les lignes préexistantes d'alimentation secteur (typiquement 230 V - 50 Hz en Europe), en faisant transiter les informations d'un équipement à l'autre par modulation d'une ou plusieurs porteuses dans une bande de fréquences habituellement située dans la plage 2-30 MHz.

Les EP 1 343 253 A1 et US 4 835 517 A sont des exemples d'équipements utilisant ces techniques de transmission de données.

L'interfaçage entre l'équipement et le secteur est assuré par un module CPL associé à chaque équipement.

Pour assurer la communication dans les deux sens *(full duplex),* le module CPL a besoin de récupérer en entrée la porteuse véhiculée sur le réseau domestique, et également d'émettre cette porteuse. Ces signaux sont généralement véhiculés par l'intermédiaire d'un transformateur isolant la partie basse tension comprenant les circuits numériques et les circuits de modulation/démodulation CPL de la partie haute tension, dangereuse, du réseau électrique. La transmission de ces signaux nécessite deux fils.

Le module CPL a également besoin d'une information de synchronisation dite "détection de passage par zéro" ou ZC (*Zero Crossing)* permettant d'assurer un séquencement correct du traitement des données à la fréquence du secteur alternatif (50 Hz). Cette information de synchronisation ("signal ZC") nécessite un, voire deux fils supplémentaires.

Enfin, en sortie, le module CPL utilise un câble de transmission de données numériques, généralement un câble de type Ethernet avec une connectique appropriée, habituellement une prise RJ45 8 fils.

Le module CPL peut également intégrer une alimentation basse tension, typiquement 12 V, pour l'équipement auquel ils sera associé. Dans ce cas, le module est également pourvu en sortie d'un câble d'alimentation terminé par une prise à brancher sur l'équipement à alimenter par le boîtier déporté contenant le module CPL.

Un exemple d'un tel boîtier CPL est le bloc combiné alimentation/module CPL dénommé *Freeplug,* fabriqué par le fournisseur d'accès Internet Free, Paris, France, qui est destiné à alimenter les équipements de type "box" de ce fournisseur d'accès tels que *Freebox* (boîtier ADSL multifonction : télévision, téléphone, routeur Wi-Fi) et *Freebox HD* (boîtier télévision intégrant décodeur, magnétoscope numérique à disque dur, serveur domestique, etc.).

Ces deux boîtiers distincts sont disposés l'un à proximité de la prise téléphonique (pour l'interfaçage ADSL), l'autre à proximité du téléviseur, et ils peuvent communiquer entre eux par courants CPL, ainsi qu'avec d'autres équipements branchés sur le même circuit électrique de l'habitation (ordinateur). L'échange de données par courants CPL est une alternative intéressante aux transmissions sans fil (réseau Wi-Fi), qui ne sont pas toujours possibles en raison des obstacles à la transmission radio, ou qui ne sont pas souhaitées par l'utilisateur.

Concrètement, un bloc combiné alimentation/module CPL se présente sous forme d'un boîtier ("bloc secteur") muni en entrée d'un câble secteur et en sortie d'un double cordon, à savoir un cordon d'alimentation 12 V, doublé par un cordon blindé de type Ethernet 8 fils pour la transmission des données démodulées vers/depuis la "box" distante.

Ce double câblage rend l'installation malcommode dans la mesure où le câble Ethernet, plus épais, est volumineux et moins flexible que le câble d'alimentation basse tension. De plus, le câble Ethernet et sa connectique associée génèrent un surcoût ainsi que des risques de rupture de liaison notamment au niveau des connecteurs RJ45, relativement fragiles.

Enfin, l'intégration dans un même bloc de l'alimentation et du module CPL engendre des contraintes thermiques relativement sévères.

En effet, un module CPL produit un dégagement de chaleur non négligeable (sa puissance consommée est de l'ordre de 3 watts), et il est nécessaire de l'intégrer dans un bloc le plus compact possible, au surplus à proximité d'une alimentation générant par elle-même un dégagement de chaleur relativement important. Il convient donc d'étudier très soigneusement le refroidissement des circuits spécifiques du module CPL pour les préserver des températures excessives risquant de conduire à une défaillance ou, à tout le moins, à un vieillissement accéléré.

Le but de l'invention est de proposer un ensemble dans lequel ces circuits CPL spécifiques sont déportés dans l'équipement distant au lieu d'être intégrés au bloc secteur, de manière à :
- se passer de câble de transmission de données numériques entre le bloc secteur et l'équipement ;
- diminuer la taille du bloc secteur, du fait de l'absence de circuits CPL spécifiques et surtout des contraintes thermiques moindres ;
- assurer un refroidissement efficace des circuits CPL spécifiques en logeant ceux-ci dans l'équipement, où le dégagement de chaleur locale est moindre et le volume disponible est plus important.

Mais pour ce faire, il est nécessaire de transférer à l'équipement :
- la modulation CPL dans le spectre 2-30 MHz,
- le signal de détection de passage par zéro (signal ZC) de la sinusoïde du réseau secteur, et
- la tension continue (12 V) pour l'alimentation de l'équipement connecté. Compte tenu de la puissance délivrée par l'alimentation, le courant d'alimentation atteint généralement plusieurs ampères, ce qui impose pour l'alimentation basse tension une ligne à faible impédance.

La transmission directe du signal ZC, dont la fréquence est basse (50 Hz), n'est pas possible sur une ligne à faible impédance car l'alimentation étant conçue pour fournir une tension de sortie stable, elle s'opposera par nature à toute modification de la tension fournie à l'équipement : le signal ZC à 50 Hz serait en effet interprété comme une ondulation résiduelle, qui serait immédiatement effacée par l'asservissement de tension de l'alimentation.

Enfin, l'injection directe du signal CPL (dans le spectre 2-30 MHz) sur la ligne à basse impédance entraînerait une dégradation rapide du signal entre la ligne secteur et l'équipement.

Le simple déport des circuits CPL du bloc secteur vers l'équipement ne permet donc pas d'atteindre à lui seul le but recherché, sauf à intégrer l'ensemble du bloc secteur à l'équipement.

Or on souhaite bien entendu conserver tous les avantages d'un bloc secteur séparé : réduction de la taille de l'équipement et du dégagement de chaleur au sein de cet équipement, modularité, sécurité du fait de l'absence de circuit sous tension secteur dans l'équipement, etc.

Pour résoudre ce problème et atteindre le but recherché, l'invention propose, essentiellement, de générer dans le bloc secteur une porteuse à une fréquence située en dehors du spectre du signal CPL et de moduler cette porteuse au rythme de la fréquence du secteur.

Cette porteuse modulée est injectée en superposition à la tension continue d'alimentation délivrée à l'équipement par le conducteur basse tension d'alimentation.

À l'autre bout de ce conducteur, côté équipement, on retrouve la porteuse et sa modulation variant (à un déphasage faible et constant près) au même rythme que la fréquence du secteur. Cette modulation peut être extraite dans l'équipement pour produire le signal ZC nécessaire au séquencement du module CPL de modulation/démodulation des signaux numériques.

Plus précisément, l'invention a pour objet un ensemble comprenant les éléments connus, par exemple d'après le EP 1 343 253 A1 précité, indiqués dans le préambule de la revendication 1. Les éléments propres à l'invention sont énoncés dans la partie caractérisante de cette revendication 1, et les sous-revendications visent diverses caractéristiques subsidiaires avantageuses.

L'invention couvre également, pris isolément, le bloc secteur et l'équipement adaptés à un tel ensemble.

On va maintenant décrire un exemple de mise en oeuvre du dispositif de l'invention, en référence aux dessins annexés où les mêmes références numériques désignent d'une figure à l'autre des éléments identiques ou fonctionnellement semblables.
La Figure 1 est une représentation schématique montrant deux ensembles selon l'état de la technique, avec pour chacun un bloc secteur et un équipement reliés ensemble par un double cordon, pour l'alimentation et pour la transmission des données numériques.
La Figure 2 illustre schématiquement un ensemble selon l'invention, avec un unique cordon d'alimentation entre bloc secteur et équipement.
La Figure 3 illustre sous forme de schéma par blocs fonctionnels la structure du bloc secteur et de l'équipement selon l'invention.
La Figure 4 illustre l'occupation du spectre des fréquences, sur le conducteur basse tension d'alimentation reliant le bloc secteur à l'équipement distant.
La Figure 5 illustre la structure interne des circuits de couplage CPL prévus dans le bloc secteur et dans l'équipement représentés Figure 3.
La Figure 6 illustre schématiquement, côté équipement, la structure interne du circuit de détection du passage par zéro, de l'oscillateur qu'il pilote et du circuit de couplage au conducteur basse tension et, côté équipement, la structure interne du circuit de synchronisation extracteur d'impulsions.

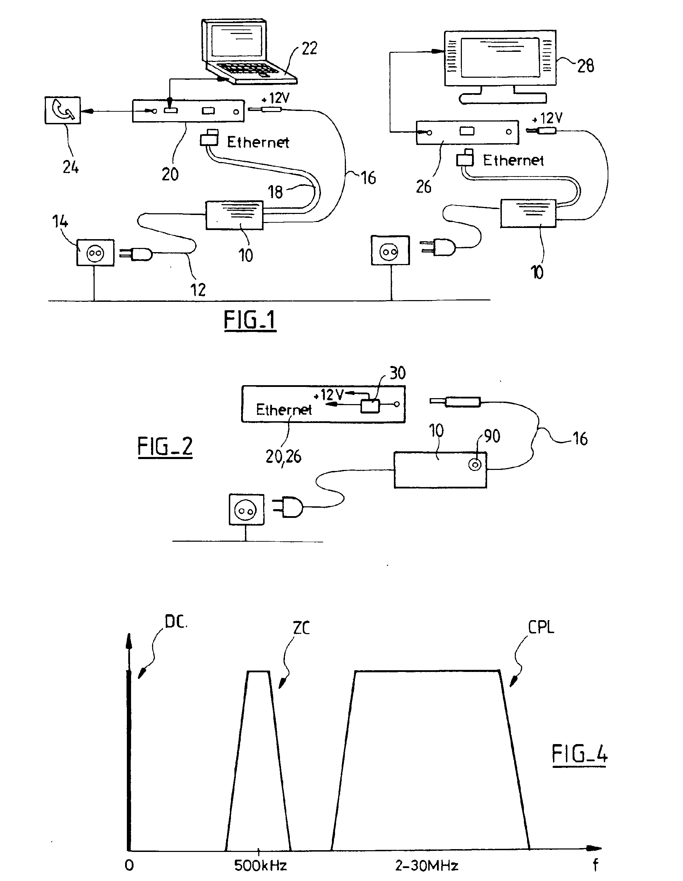

La Figure 1 illustre schématiquement deux ensembles selon l'état de la technique, comportant chacun un bloc secteur et un équipement reliés ensemble, de façon caractéristique, par un double cordon.

Chacun des ensembles est constitué d'un bloc secteur 10 combiné alimentation basse tension/module CPL, relié par un cordon 12 à une prise 14 de la ligne secteur (habituellement 230 V - 50 Hz). En sortie, le bloc secteur 10 est muni d'un cordon 16 servant de conducteur d'alimentation basse tension (généralement +12 V) et d'un câble de données numériques 18, par exemple un câble Ethernet, ces deux cordons 16, 18 étant reliés à un équipement 20 ou 26.

L'équipement 20 est par exemple un boîtier ADSL multifonctions relié à un ordinateur 22 et à une prise téléphonique 24 (pour l'interfaçage ADSL), et l'équipement 26 est un boîtier TV relié à un téléviseur 28. Grâce aux modules CPL intégrés aux blocs secteur 10, il est possible d'échanger des données entre l'équipement 20 placé à proximité de la prise téléphonique 24 et l'équipement 26 placé à proximité du téléviseur 28.

Bien entendu, d'autres types d'équipements peuvent être utilisés, ou à d'autres fins, par exemple pour constituer un réseau domestique entre plusieurs ordinateurs tous branchés sur la même ligne secteur par l'intermédiaire de blocs 10 respectifs.

Par rapport à l'état de la technique illustré Figure 1, l'objet de l'invention est, comme illustré Figure 2, d'éliminer le câble 18 spécifique à la transmission des données numériques entre le bloc secteur 10 et l'équipement 20 ou 26, en faisant transiter la totalité des informations nécessaires à la mise en oeuvre de la technique CPL par le seul conducteur d'alimentation basse tension 16 de l'équipement 20 ou 26.

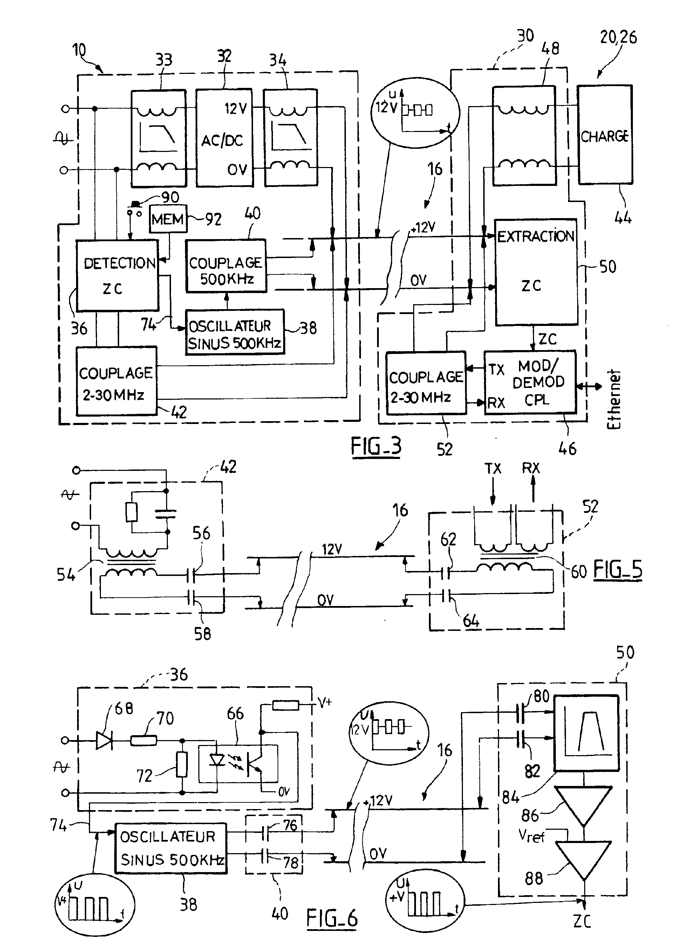

La Figure 3 illustre sous forme de schéma par blocs fonctionnels les différents circuits du bloc secteur 10 et ceux, désignés 30, qui sont intégrés à l'équipement 20, 26 et qui sont propres à la mise en oeuvre de l'invention. Le bloc secteur 10 comprend un convertisseur AC/DC 32 à découpage (intégrant en amont un filtre passe-bas 33 pour éviter que les hautes fréquences générées par le convertisseur ne perturbent les signaux CPL) permettant de transformer la tension alternative 230 V - 50 Hz du secteur en une tension continue stabilisée +12 V. Cette tension continue est appliquée au conducteur basse tension 16 d'alimentation de l'équipement distant 20, 26.

Le couplage entre le convertisseur 32 et le conducteur basse tension 16 se fait par l'intermédiaire d'un filtre passe-bas 34 constitué d'une inductance de puissance dimensionnée de manière à pouvoir supporter le courant de sortie dans le conducteur basse tension (de plusieurs ampères, typiquement de l'ordre de 4 A), faisant en sorte que l'alimentation ne présente pas une impédance faible aux hautes fréquences, ce qui atténuerait les signaux CPL.

Le bloc secteur 10 comporte également un circuit additionnel 36 de détection du signal ZC (détection de passage par zéro), relié à l'entrée secteur alternative, et un oscillateur 38 qui génère une onde sinusoïdale à une fréquence située en dehors de la bande de fréquence des signaux CPL, par exemple un oscillateur sinusoïdal 500 kHz. Le circuit 36 pilote l'oscillateur 38 de manière à moduler au rythme du secteur 50 Hz l'onde sinusoïdale 500 kHz, de préférence une modulation en "tout-ou-rien" (modulation OOK, *On-Off Keying).* Le signal modulé résultant en sortie de l'oscillateur 38 est appliqué au conducteur basse tension 16 par l'intermédiaire d'un circuit de couplage 40 adapté à la fréquence de l'oscillateur sinusoïdal (couplage autour de la fréquence de 500 kHz).

Le bloc-secteur 10 comporte également un circuit de couplage CPL 42, relié en entrée à la ligne secteur et en sortie au conducteur basse tension 16 en aval du filtre passe-bas 34, de manière que la charge présente aux hautes fréquences une impédance suffisamment élevée pour ne pas atténuer les signaux CPL dans la bande 2-30 MHz.

La Figure 4 illustre l'occupation du spectre de fréquence des différents signaux présents sur le conducteur basse tension 16. Outre la composante continue DC générée par le convertisseur 32 et délivrée en sortie du filtre passe-bas 34, on retrouve la bande 2-30 MHz des signaux numériques CPL présents sur la ligne secteur et transférés au conducteur basse tension par le circuit de couplage 2-30 MHz 42. Le spectre est également occupé par la porteuse 500 kHz générée en sortie de l'oscillateur 38, modulée par le signal de détection ZC et appliquée au conducteur 16 par le circuit de couplage 40. On notera que la fréquence de l'oscillateur 38 (ici, 500 kHz) est choisie de manière à se situer en dehors de la bande des fréquences CPL (ici 2-30 MHz), et avec un éloignement suffisant pour éviter notamment que les harmoniques éventuels de la porteuse 500 kHz ne viennent perturber les signaux situés dans cette band CPL.

Du côté de l'équipement 20, 26, le conducteur basse tension 16 alimente la charge 44 en +12 V continus avec, selon les contraintes habituelles, un minimum d'ondulation 50 Hz résiduelle : en effet, lorsque l'équipement comprend par exemple un disque dur pour un magnétoscope numérique, une ondulation excessive empêcherait un fonctionnement correct du disque dur, de sorte qu'il est important de maîtriser parfaitement ce paramètre.

L'ensemble 30 comprend :
- un circuit 46 de modulation/démodulation CPL,
- un filtre passe-bas 48 constitué de selfs de puissance interposées entre le conducteur basse tension 16 et la charge 44 (la nature et la fonction de ce filtre 48 sont semblables à celles du filtre 34 situé dans le bloc secteur 10),
- un circuit de synchronisation 50 comprenant des moyens d'extraction du signal ZC, ainsi que
- un circuit 52 de couplage CPL (dont la structure et les fonctions sont semblables au circuit de couplage CPL 42 du bloc secteur 10).

Le circuit 46 de modulation/démodulation CPL comprend une entrée/sortie TX/RX reliée au circuit de couplage CPL 52, lui-même directement connecté au conducteur basse tension 16, ainsi qu'une entrée/sortie Ethernet reliée aux circuits numériques internes de l'équipement 20, 26. Cette entrée/sortie peut être véhiculée par tout type de bus supportant l'Ethernet tel que MII *(Media Independent Interface),* SMI *(Serial Media Interface),* RGMII *(Reduced Gigabit Media Independent Interface),* etc. de manière à se passer du transformateur habituellement utilisé et réduire ainsi le coût du produit.

Le circuit 46 de modulation/démodulation CPL reçoit également en entrée un signal ZC à la fréquence du secteur, pour la synchronisation et le séquencement de la modulation et de la démodulation des données numériques. Ce signal ZC est extrait par le circuit 50 qui est directement relié en entrée au conducteur basse tension 16.

On va maintenant décrire en détail la structure des différents circuits correspondant aux blocs fonctionnels de la Figure 3, pour le bloc secteur 10 et pour le circuit 30 de l'équipement 20, 26.

La Figure 5 illustre les circuits 42 et 52 de couplage CPL, disposés respectivement dans le bloc secteur 10 et dans le circuit 30 de l'équipement 20,26.

Comme on l'a indiqué, le signal CPL dans la bande 2-30 MHz est véhiculé par le conducteur basse tension 16 d'alimentation de l'équipement, de façon bidirectionnelle.

Du côté du bloc secteur, le circuit 42 comprend un transformateur 54 assurant l'isolation nécessaire entre la haute tension de la ligne secteur et la basse tension du conducteur 16. Ce transformateur 54 peut être un transformateur à deux enroulements, couplé en alternatif au conducteur basse tension d'alimentation 16 par deux condensateurs de liaison 56, 58. Du côté de l'équipement, le circuit 52 comprend un transformateur d'isolation 60 comprenant trois enroulements, couplé de la même façon en alternatif au conducteur basse tension 16 par l'intermédiaire de condensateurs de liaison 62, 64.

La Figure 6 illustre de façon plus détaillée la structure :
- côté bloc secteur, du circuit additionnel 36 de détection de passage par zéro, de l'oscillateur 38 et du circuit de couplage 40, et
- côté équipement, du circuit de synchronisation 50 extracteur d'impulsions.

Le circuit additionnel 36 peut notamment mettre en oeuvre un optocoupleur 66 pour réaliser l'isolement entre la haute tension du secteur et la basse tension des circuits logiques et analogiques de génération des signaux modulés. Plus précisément, la diode 68 ne laisse passer que l'alternance positive de la sinusoïde de la tension secteur, et un pont diviseur 70, 72 abaisse la tension à une valeur compatible avec la LED de l'optocoupleur 66, la résistance 72 étant choisie de manière à ne pas dépasser la tension inverse maximale autorisée aux bornes de cette LED. En sortie de l'optocoupleur 66, on récupère un signal carré 74 qui commande en tout-ou-rien (modulation d'amplitude OOK 0-100 %) un oscillateur sinusoïdal 38 de fréquence 500 kHz, dont le signal de sortie (500 kHz modulé 50 Hz) est appliqué au conducteur basse tension 16 par l'intermédiaire des condensateurs de liaison 76 et 78 du circuit de couplage 40.

Du côté de l'équipement 50, le circuit de synchronisation 50 permettant d'extraire les impulsions à 50 Hz du signal 500 kHz modulé comprend des condensateurs de liaison 80, 82 servant à éliminer la composante continue (+12 V) présente sur le conducteur basse tension 16. Le signal alternatif résiduel est appliqué à un filtre passe-bande 84 centré sur la bande 500 kHz, puis amplifié par l'amplificateur 86 et appliqué à un comparateur (amplificateur à seuil) 88 assurant une mise en forme et délivrant en sortie le signal ZC de détection de passage par zéro. Ce signal ZC se présente sous forme d'un signal carré à la fréquence du secteur, identique au signal 74 qui avait été obtenu en sortie du circuit additionnel 36 du bloc secteur, avec toutefois un déphasage constant qui pourra être compensé par des moyens matériels ou logiciels lors du décodage ou du codage des données CPL par le circuit 46.

De façon générale, le fait de déporter les circuits de modulation/démodulation CPL dans l'équipement permet de réduire la taille du bloc secteur 10 (i) d'une part du fait de la suppression de ce circuit CPL, et (ii) d'autre part et surtout, du fait de la réduction des contraintes thermiques.

En effet, le circuit CPL ne subit plus l'échauffement du convertisseur du bloc secteur. Comme en outre il est placé dans l'équipement, il y dispose d'un plus grand volume pour dissiper la chaleur qu'il produit, de sorte qu'il est beaucoup plus facile d'assurer le bon refroidissement des circuits numériques correspondants, en augmentant ainsi leur fiabilité et leur durée de vie.

Par ailleurs, on notera que la présente invention que l'on vient de décrire ne s'applique pas uniquement à la transmission de l'information de détection de passage par zéro (signal ZC) nécessaire à la mise en oeuvre de l'application CPL.

Elle peut également s'appliquer à la transmission à faible débit de données entre le bloc secteur 10 et l'équipement 20 ou 26, via le conducteur basse tension 16 d'alimentation de cet équipement.

Il est ainsi possible de transmettre à l'équipement des informations relatives au bloc secteur, notamment à la mise en service de celui-ci.

Le bloc secteur peut être en particulier pourvu à cet effet d'un bouton-poussoir 90 (Figure 1) permettant le déclenchement d'une modulation "tout ou rien" pendant des périodes où le CPL n'est pas utilisé.

Cette modulation "tout ou rien" est une modulation OOK *(On-Off Keying),* "tout" signifiant que le signal de pilotage 74 est généré par le circuit 36 et active donc l'oscillateur 38, et "rien" signifiant que le signal de pilotage 74 n'est pas généré, inhibant de ce fait l'oscillateur 38. Elle permet par exemple de transmettre à l'équipement des informations contenues dans une mémoire 92 du bloc secteur (telles que numéro de série, version, etc.) via le conducteur d'alimentation 16, ou encore des signaux de supervision du bloc secteur tels que : alarme de température, surtension détectée, dysfonctionnements divers, etc.

Cette transmission d'informations à bas débit entre le bloc secteur et l'équipement est opérée pendant les "périodes de silence" des données CPL, c'est-à-dire les périodes où aucune de ces données numériques n'est transmise sur le conducteur 16.

On pourra en particulier utiliser cette fonction à la mise sous tension, par exemple en appuyant sur le bouton 90 pour l'association des boîtiers CPL ou la lecture de la mémoire 92.

Dans tous les cas, l'utilisation de la transmission de données à bas débit via la modulation 50 Hz sur le câble 12 V stoppera temporairement le signal ZC, ce qui n'est pas critique en soi puisqu'il n'y a pas de données CPL à moduler ou démoduler durant cette phase.

## Revendications

1. Un ensemble mettant en oeuvre une technique de transmission de données par courants porteurs en ligne CPL véhiculés sur une ligne secteur, comprenant :
- un équipement (20, 26) apte à traiter des données numériques CPL reçues ou émises sur ladite ligne secteur ;
- un bloc secteur (10) distinct de l'équipement, comportant un convertisseur à découpage (32) apte à générer une tension continue d'alimentation à partir de la tension de la ligne secteur ; et
- un conducteur d'alimentation basse tension (16) reliant le bloc secteur à l'équipement, pour délivrer à ce dernier la tension continue d'alimentation générée par le bloc secteur distant,
ledit ensemble comportant :
- un circuit de modulation/démodulation de courants CPL véhiculés par la ligne secteur ; et
- un circuit de synchronisation, produisant un signal à la fréquence du secteur appliqué en entrée du circuit de modulation/démodulation,
cet ensemble étant essentiellement dépourvu de liaison spécifique de transmission de données numériques entre le bloc secteur et l'équipement, ces données numériques étant transmises par l'intermédiaire du conducteur d'alimentation basse tension (16),
le circuit de modulation/démodulation CPL (46) et le circuit de synchronisation (50) étant disposés dans l'équipement (20, 26), et
le bloc secteur (10) comprenant un circuit de couplage CPL (42) entre la ligne secteur et le conducteur basse tension, et l'équipement (20, 26) comprenant un circuit de couplage CPL (52) entre le conducteur basse tension et le circuit de modulation/démodulation CPL ;
ledit ensemble étant **caractérisé en ce que** :
- il est prévu dans le bloc secteur (10) :
· un circuit additionnel (36), couplé en entrée à la ligne secteur et délivrant en sortie un signal de pilotage (74) à la fréquence du secteur ; et
· un oscillateur (38) générant une onde sinusoïdale à une fréquence supérieure à la fréquence du secteur et située hors de la bande de fréquences de modulation/démodulation des signaux CPL, cette onde étant modulée par le signal de pilotage (74) délivré par le circuit additionnel (36), et la sortie de l'oscillateur étant couplée au conducteur basse tension de manière à injecter ladite onde modulée en superposition de la tension continue d'alimentation, et
- le circuit de synchronisation dans l'équipement comprend un circuit extracteur (50) d'impulsions à la fréquence du secteur, couplé en entrée au conducteur basse tension.

2. L'ensemble de la revendication 1, dans lequel le circuit additionnel (36) est un circuit de couplage via un optocoupleur (66) interposé entre la ligne secteur et une entrée de modulation de l'oscillateur (38).

3. L'ensemble de la revendication 1, dans lequel il est prévu dans le bloc secteur (10) un filtre passe-bas (34) entre la sortie du convertisseur à découpage et le conducteur basse tension, et il est prévu dans l'équipement (20, 26) un filtre passe-bas (48) entre le conducteur basse tension et les circuits de l'équipement à alimenter par la tension continue générée par le convertisseur à découpage.

4. L'ensemble de la revendication 1, dans lequel le circuit extracteur d'impulsions (50) comprend un filtre passe-bande (84) centré sur la fréquence de l'onde sinusoïdale, couplé en entrée au conducteur basse tension, et dont la sortie est appliquée à l'entrée d'un comparateur à seuil (88) délivrant en sortie un signal impulsionnel (ZC) à la fréquence du secteur, appliqué en entrée du circuit de modulation/démodulation CPL (46).

5. L'ensemble de la revendication 1, dans lequel le circuit de synchronisation comprend en outre des moyens matériels ou logiciels de compensation du déphasage du signal à la fréquence du secteur délivré par le circuit extracteur d'impulsions (50), par rapport à la tension alternative de la ligne secteur.

6. L'ensemble de la revendication 1, dans lequel la fréquence de l'onde sinusoïdale est comprise dans la bande 500 kHz, les fréquences de modulation/démodulation des signaux CPL étant comprises dans la bande 2-30 MHz.

7. L'ensemble de la revendication 1, comprenant en outre des moyens de transmission d'informations à bas débit sur la ligne basse tension, dans lesquels :
- le bloc secteur (10) comprend un circuit pour moduler en tout-ou-rien ledit signal de pilotage à la fréquence du secteur, en fonction des informations à transmettre ; et
- l'équipement (20, 26) comprend des moyens de décodage, pour extraire lesdites informations à transmettre à partir du signal délivré en sortie par le circuit extracteur d'impulsions couplé en entrée au conducteur basse tension.

8. L'ensemble de la revendication 7, dans lequel le bloc secteur (10) comprend en outre un bouton-poussoir (90) d'activation dudit circuit de modulation en tout-ou-rien, pour initier la transmission desdites informations, contenues dans une mémoire (92) du bloc secteur.

9. Un bloc secteur (10) adapté à un ensemble selon l'une des revendications 1 à 8, comprenant :
- un convertisseur à découpage (32) apte à générer une tension continue d'alimentation à partir de la tension de la ligne secteur ;
- un circuit de couplage CPL (42) entre la ligne secteur et le conducteur d'alimentation basse tension ; et
- un circuit additionnel (36), couplé en entrée à la ligne secteur et délivrant en sortie un signal de pilotage (74) à la fréquence du secteur ; et
- un oscillateur (38) générant une onde sinusoïdale à une fréquence supérieure à la fréquence du secteur et située hors de la bande de fréquences de modulation/démodulation des signaux CPL, cette onde étant modulée par le signal de pilotage (74) délivré par le circuit additionnel, et la sortie de l'oscillateur étant couplée au conducteur basse tension de manière à injecter ladite onde modulée en superposition de la tension continue d'alimentation.

10. Un équipement (20, 26) adapté à un ensemble selon l'une des revendications 1 à 8, comprenant :
- un circuit (46) de modulation/démodulation de courants CPL véhiculés par la ligne secteur ;
- un circuit de couplage CPL (52) entre le conducteur d'alimentation basse tension et le circuit de modulation/démodulation CPL ; et
- un circuit de synchronisation, comprenant un circuit extracteur (50) d'impulsions à la fréquence du secteur, couplé en entrée au conducteur basse tension et produisant en sortie un signal à la fréquence du secteur appliqué en entrée du circuit de modulation/démodulation.

## Claims

1. Assembly implementing a technique for data transmission by power line communication PLC, conveyed over a mains line, comprising:
- an apparatus (20, 26) suitable for processing PLC digital data received or transmitted over said mains line;
- a mains block (10) separate from the apparatus, comprising a switched-mode converter (32) suitable for generating a DC power supply voltage from the mains line voltage; and
- a low voltage power supply conductor (16) linking the mains block to the apparatus, for delivering to the latter the DC power supply voltage generated by the remote mains block,
said assembly comprising:
- a circuit for modulating/demodulating PLC currents conveyed by the mains line; and
- a synchronization circuit, producing a signal at the frequency of the mains applied as input to the modulation/demodulation circuit,
this assembly essentially having no specific digital data transmission link between the mains block and the apparatus, these digital data being transmitted via the low voltage power supply conductor (16);
the PLC modulation/demodulation circuit (46) and the synchronization circuit (50) being arranged in the apparatus (20, 26), and
the mains block (10) comprising a PLC coupling circuit (42) between the mains line and the low voltage conductor, and the apparatus (20, 26) comprising a PLC coupling circuit (52) between the low voltage conductor and the PLC modulation/demodulation circuit,
said assembly being **characterized in that**:
- there is provided, in the mains block (10) an additional circuit (36), coupled as input to the mains line and delivery as output a driver signal (74) at the mains frequency;
and
- an oscillator (38) generating a sinusoidal wave at a frequency higher than the mains frequency and located outside the band of modulation/demodulation frequencies of the PLC signals, this wave being modulated by the driver signal (74) delivered by the additional circuit (36), and the output of the oscillator being coupled to the low voltage conductor so as to inject said modulated wave superimposed on the DC power supply voltage, and
- the synchronization circuit in the apparatus comprises a circuit (50) for extracting pulses at the frequency of the mains, coupled as input to the low voltage conductor.

2. Assembly according to Claim 1, in which the additional circuit (36) is a coupling circuit via an optocoupler (66) interposed between the mains line and a modulation input of the oscillator (38).

3. Assembly according to Claim 1, in which there is provided, in the mains block (10), a low-pass filter (34) between the output of the switched-mode converter and the low voltage conductor, and there is provided, in the apparatus (20, 26), a low-pass filter (44) between the low voltage conductor and the circuits of the apparatus to be powered by the DC voltage generated by the switched-mode converter.

4. Assembly according to Claim 1, in which the pulse extracting circuit (50) comprises a low-pass filter (84) centred on the frequency of the sinusoidal wave, coupled as input to the low voltage conductor, and the output of which is applied to the input of a threshold comparator (88) delivering as output a pulsed signal (ZC) at the frequency of the mains, applied as input to the PLC modulation/demodulation circuit (46).

5. Assembly according to Claim 1, in which the synchronization circuit also comprises hardware or software means for compensating the phase shift of the signal at the frequency of the mains delivered by the pulse extracting circuit (50), relative to the AC voltage of the mains line.

6. Assembly according to Claim 1, in which the frequency of the sinusoidal wave is in the 500 kHz band, the modulation/demodulation frequencies of the PLC signals being in the 2-30 MHz band.

7. Assembly according to Claim 1, also comprising means for transmitting information at low bit rate over the low voltage line, in which:
- the mains block (10) comprises a circuit for digitally modulating said driver signal at the frequency of the mains, according to the information to be transmitted; and
- the apparatus (20, 26) comprises decoding means, for extracting said information to be transmitted from the signal delivered as output by the pulse extracting circuit coupled as input to the low voltage conductor.

8. Assembly according to Claim 7, in which the mains block (10) also comprises a push button (90) for activating said digital modulation circuit, for initiating the transmission of said information, contained in a memory (92) of the mains block.

9. Mains block (10) suitable for an assembly according to one of Claims 1 to 8, comprising:
- a switched-mode converter (32) suitable for generating a DC power supply voltage from the voltage of the mains line;
- a PLC coupling circuit (42) between the mains line and the low voltage power supply conductor; and
- an additional circuit (36),
an additional circuit (36), coupled as input to the mains line and delivery as output a driver signal (74) at the mains frequency;
and
- an oscillator (38) generating a sinusoidal wave at a frequency higher than the mains frequency and located outside the band of modulation/demodulation frequencies of the PLC signals, this wave being modulated by the driver signal (74) delivered by the additional circuit (36), and the output of the oscillator being coupled to the low voltage conductor so as to inject said modulated wave superimposed on the DC power supply voltage.

10. Apparatus (20, 26) suitable for an assembly according to one of Claims 1 to 8, comprising:
- a circuit (46) for modulating/demodulating PLC currents conveyed by the mains line;
- a PLC coupling circuit (52) between the low voltage power supply conductor and the PLC modulation/demodulation circuit; and
- a synchronization circuit, comprising a pulse extracting circuit (50) at the frequency of the mains, coupled as input to the low voltage conductor and producing as output a signal at the frequency of the mains applied as input to the modulation/demodulation circuit.

## Patentansprüche

1. Einheit, die eine Stromnetzkommunikation(PLC)-Übertragungstechnik von Daten anwendet, die auf einer Netzleitung transportiert werden, die Folgendes enthält:
- eine Ausrüstung (20, 26), die digitale PLC-Daten verarbeiten kann, die auf der Netzleitung empfangen oder gesendet werden;
- ein von der Ausrüstung getrenntes Netzanschlussgerät (10), das einen getakteten Wandler (32) aufweist, der eine Speisegleichspannung ausgehend von der Spannung der Netzleitung erzeugen kann; und
- einen Niederspannungsspeiseleiter (16), der das Netzanschlussgerät mit der Ausrüstung verbindet, um an diese die vom fernen Netzanschlussgerät erzeugte Speisegleichspannung zu liefern,
wobei die Einheit Folgendes aufweist:
- einen Modulations-/Demodulationsschaltkreis von PLC-Strömen, die von der Netzleitung übertragen werden; und
- einen Synchronisationsschaltkreis, der ein Signal auf der Netzfrequenz erzeugt, das an den Eingang des Modulations-/Demodulationsschaltkreises angelegt wird,
wobei diese Einheit im Wesentlichen keine spezifische Verbindung zur Übertragung digitaler Daten zwischen dem Netzanschlussgerät und der Ausrüstung aufweist, wobei diese digitalen Daten mit Hilfe des Niederspannungs-Speiseleiters (16) übertragen werden;
wobei der PLC-Modulations-/Demodulationsschaltkreis (46) und der Synchronisationsschaltkreis (50) in der Ausrüstung (20, 26) angeordnet sind, und
wobei das Netzanschlussgerät (10) einen PLC-Schaltkreis (42) zwischen der Netzleitung und dem Niederspannungsleiter enthält, und die Ausrüstung (20, 26) einen PLC-Kopplungsschaltkreis (52) zwischen dem Niederspannungsleiter und dem PLC-Modulations-/Demodulationsschaltkreis enthält, wobei die Einheit **dadurch gekennzeichnet ist, dass**:
- im Netzanschlussgerät (10) vorgesehen ist:
• ein zusätzlicher Schaltkreis (36), der am Eingang mit der Netzleitung gekoppelt ist und am Ausgang ein Steuersignal (74) auf der Netzfrequenz liefert; und
• ein Oszillator (38), der eine Sinuswelle auf einer Frequenz erzeugt, die höher ist als die Netzfrequenz und sich außerhalb des Modulations-/Demodulations-Frequenzbands der PLC-Signale befindet, wobei diese Welle durch das vom zusätzlichen Schaltkreis (36) gelieferte Steuersignal (74) moduliert wird, und wobei der Ausgang des Oszillators so mit dem Niederspannungsleiter gekoppelt ist, dass die modulierte Welle in Überlagerung der Versorgungsgleichspannung eingespeist wird; und
- der Synchronisationsschaltkreis in der Ausrüstung einen Impulsentnahmeschaltkreis (50) auf der Netzfrequenz enthält, der am Eingang mit dem Niederspannungsleiter gekoppelt ist.

2. Einheit nach Anspruch 1, bei der der zusätzliche Schaltkreis (36) ein Kopplungsschaltkreis über einen optischen Koppler (66) ist, der zwischen die Netzleitung und einen Modulationseingang des Oszillators (38) eingefügt ist.

3. Einheit nach Anspruch 1, bei der im Netzanschlussgerät (10) ein Tiefpassfilter (34) zwischen dem Ausgang des getakteten Wandlers und dem Niederspannungsleiter vorgesehen ist, und in der Ausrüstung (20, 26) ein Tiefpassfilter (48) zwischen dem Niederspannungsleiter und den Schaltkreisen der Ausrüstung vorgesehen ist, die mit der vom getakteten Wandler erzeugten Gleichspannung gespeist werden sollen.

4. Einheit nach Anspruch 1, bei der der Impulsentnahmeschaltkreis (50) ein Bandpassfilter (84) enthält, das auf die Frequenz der Sinuswelle zentriert, am Eingang mit dem Niederspannungsleiter gekoppelt ist, und dessen Ausgang an den Eingang eines Schwellenkomparators (88) angelegt wird, der am Ausgang ein Impulssignal (ZC) auf der Netzfrequenz liefert, das an den Eingang des PLC-Modulations-/Demodulationsschaltkreises (46) angelegt wird.

5. Einheit nach Anspruch 1, bei der der Synchronisationsschaltkreis außerdem Hardware- oder Softwareeinrichtungen zur Kompensation der Phasenverschiebung des Signals auf der Netzfrequenz, das von dem Impulsentnahmeschaltkreis (50) geliefert wird, bezüglich der Wechselspannung der Netzleitung enthält.

6. Einheit nach Anspruch 1, bei der die Frequenz der Sinuswelle im 500 kHz-Band liegt, während die Modulations-/Demodulationsfrequenzen der PLC-Signale im 2-30 MHz-Band liegen.

7. Einheit nach Anspruch 1, die außerdem Einrichtungen zur Übertragung von Informationen mit niedriger Übertragungsrate auf der Niederspannungsleitung enthält, bei denen:
- das Netzanschlussgerät (10) einen Schaltkreis enthält, um eine Ein/Aus-Modulation des Steuerungsignals auf der Netzfrequenz abhängig von den zu übertragenden Informationen durchzuführen; und
- die Ausrüstung (20, 26) Decodiereinrichtungen enthält, um die zu übertragenden Informationen ausgehend von dem am Ausgang vom Impulsentnahmeschaltkreis gelieferten Signal zu entnehmen, der am Eingang mit dem Niederspannungsleiter gekoppelt ist.

8. Einheit nach Anspruch 7, bei der das Netzanschlussgerät (10) außerdem einen Drücker (90) zur Aktivierung des Ein/Aus-Modulationsschaltkreises enthält, um die Übertragung der Informationen zu initiieren, die in einem Speicher (92) des Netzanschlussgeräts enthalten sind.

9. Netzanschlussgerät (10), das an eine Einheit nach einem der Ansprüche 1 bis 8 angepasst ist, das Folgendes enthält:
- einen getakteten Wandler (32), der eine Speisegleichspannung ausgehend von der Spannung der Netzleitung erzeugen kann;
- einen PLC-Schaltkreis (42) zwischen der Netzleitung und dem Niederspannungsspeiseleiter, und
- einen zusätzlichen Schaltkreis (36), der am Eingang mit der Netzleitung gekoppelt ist und am Ausgang ein Steuersignal (74) auf der Netzfrequenz liefert; und
- einen Oszillator (38), der eine Sinuswelle auf einer Frequenz erzeugt, die höher ist als die Netzfrequenz und sich außerhalb des Modulations-/Demodulations-Frequenzbands der PLC-Signale befindet, wobei diese Welle von dem vom zusätzlichen Schaltkreis gelieferten Steuersignal (74) moduliert wird, und der Ausgang des Oszillators so mit dem Niederspannungsleiter gekoppelt ist, dass die modulierte Welle in Überlagerung der Versorgungsgleichspannung eingespeist wird.

10. Ausrüstung (20, 26), die an eine Einheit nach einem der Ansprüche 1 bis 8 angepasst ist und Folgendes enthält:
- einen Schaltkreis (46) zur Modulation/Demodulation von PLC-Strömen, die von der Netzleitung transportiert werden;
- einen PLC-Kopplungsschaltkreis (52) zwischen dem Niederspannungsspeiseleiter und dem PLC-Modulations-/Demodulationsschaltkreis; und
- einen Synchronisationsschaltkreis, der einen Impulsentnahmeschaltkreis (50) auf der Netzfrequenz enthält, der am Eingang mit dem Niederspannungsleiter gekoppelt ist und am Ausgang ein Signal auf der Netzfrequenz erzeugt, das an den Eingang des Modulations-/Demodulationsschaltkreises angelegt wird.
